# EUROPEAN PATENT APPLICATION

(11) **EP 4 325 368 A1**
(43) Date of publication of application: **21.02.2024**
(21) Application number: 23177895.2
(22) Date of filing: 07.06.2023
(51) Int. Cl.: G06F 12/0842, G06F 12/084, G06F 12/0864, G06F 12/0871, G06F 12/0895, G06N 3/063, G06N 3/045

(54) **SYSTEMS AND METHODS FOR INFERENCE SYSTEM CACHING**

(30) Priority: 15.08.2022 US 202263398047 P; 21.09.2022 US 202217934171
(71) Applicant: Samsung Electronics Co., Ltd., Suwon-si, Gyeonggi-do 16677 (KR)
(72) Inventor: ELYASI, Mehran, San Jose, CA 95134 (US); LI, Zongwang, San Jose, CA 95134 (US); PITCHUMANI, Rekha, San Jose, CA 95134 (US); ZHANG, Tong, San Jose, CA 95134 (US); PARK, Heekwon, San Jose, CA 95134 (US)
(74) Representative: Kuhnen & Wacker Patent- und Rechtsanwaltsbüro PartG mbB

(57) **Abstract**

A system and method for inference using an embedding table is provided. In some embodiments, the method includes forming a culled index vector including a first index, and requesting a weight vector corresponding to the first index. The first index may be a first element of a first index vector, the first index being culled within the culled index vector.

## Description

### FIELD

One or more aspects of embodiments according to the present disclosure relate to machine learning, and more particularly to a system and method for inference using an embedding table.

### BACKGROUND

Machine learning inference may be used in various applications in the context of big data processing and storage. For example, recommendation systems may employ large volumes of user data representing preferences and usage patterns, and inference systems may generate recommendations based on such data.

It is with respect to this general technical environment that aspects of the present disclosure are related.

### SUMMARY

According to an embodiment of the present disclosure, there is provided a method, including: forming a culled index vector including a first index, the first index being a first element of a first index vector, the first index being culled within the culled index vector; and requesting a weight vector corresponding to the first index.

In some embodiments, the forming of the culled index vector includes calculating a first hashed value, the calculating of the first hashed value including hashing the first element of the first index vector.

In some embodiments, the forming of the culled index vector further includes performing a check for the first hashed value in a hashed values table.

In some embodiments, the forming of the culled index vector further includes, in response to a result of the check, saving the first index and the first hashed value in the hashed values table.

In some embodiments, the forming of the culled index vector further includes: performing a check for the first hashed value in a hashed values table; determining that the first hashed value is present in the hashed values table; calculating a second hashed value, the calculating of the second hashed value including hashing the first index; performing a check for the second hashed value in the hashed values table; and saving the first index and the second hashed value in the hashed values table.

In some embodiments, the forming of the culled index vector further includes calculating a second hashed value, the calculating of the second hashed value including hashing a second element of the first index vector.

In some embodiments, the forming of the culled index vector further includes performing a check for the second hashed value in the hashed values table.

In some embodiments, the requesting of the weight vector includes performing a check, in a cache, for the first index.

In some embodiments, the requesting of the weight vector further includes, in response to a result of the check, reading, from the cache, a weight vector corresponding to the first index.

In some embodiments: the performing of the check includes performing the check by a first input-output thread and the reading from the cache includes reading from the cache by the first input-output thread.

In some embodiments, the requesting of the weight vector further includes, in response to a result of the check, reading, from persistent storage, a weight vector corresponding to the first index.

In some embodiments, the forming of the culled index vector includes forming the culled index vector by a persistent storage driver.

In some embodiments, the requesting of the weight vector includes requesting the weight vector by the persistent storage driver.

In some embodiments, the persistent storage driver includes a Nonvolatile Memory Express (NVME) driver.

According to an embodiment of the present disclosure, there is provided a system, including: a processing circuit; and memory, operatively connected to the processing circuit and storing instructions that, when executed by the processing circuit, cause the system to perform a method, the method including: forming a culled index vector including a first index, the first index being a first element of a first index vector, the first index being culled within the culled index vector; and requesting a weight vector corresponding to the first index.

In some embodiments, the forming of the culled index vector includes calculating a first hashed value, the calculating of the first hashed value including hashing the first element of the first index vector.

In some embodiments, the forming of the culled index vector further includes performing a check for the first hashed value in a hashed values table.

In some embodiments, the forming of the culled index vector further includes, in response to a result of the check, saving the first index and the first hashed value in the hashed values table.

In some embodiments, the forming of the culled index vector further includes: performing a check for the first hashed value in a hashed values table; determining that the first hashed value is present in the hashed values table; calculating a second hashed value, the calculating of the second hashed value including hashing the first index; performing a check for the second hashed value in the hashed values table; and saving the first index and the second hashed value in the hashed values table.

According to an embodiment of the present disclosure, there is provided a system, including: means for processing; and memory, operatively connected to the means for processing and storing instructions that, when executed by the means for processing, cause the system to perform a method, the method including: forming a culled index vector including a first index, the first index being a first element of a first index vector, the first index being culled within the culled index vector; and requesting a weight vector corresponding to the first index.

### BRIEF DESCRIPTION OF THE DRAWINGS

These and other features and advantages of the present disclosure will be appreciated and understood with reference to the specification, claims, and appended drawings wherein:
FIG. 1 is a block diagram of a system for performing machine learning inference using an embedding table, according to an embodiment of the present disclosure;
FIG. 2 is a functional block diagram of a machine learning inference application and a persistent storage driver, according to an embodiment of the present disclosure; and
FIG. 3 is a flow chart of a portion of a method for retrieving data from an embedding table, according to an embodiment of the present disclosure.

### DETAILED DESCRIPTION

The detailed description set forth below in connection with the appended drawings is intended as a description of exemplary embodiments of a system and method for inference using an embedding table provided in accordance with the present disclosure and is not intended to represent the only forms in which the present disclosure may be constructed or utilized. The description sets forth the features of the present disclosure in connection with the illustrated embodiments. It is to be understood, however, that the same or equivalent functions and structures may be accomplished by different embodiments that are also intended to be encompassed within the scope of the disclosure. As denoted elsewhere herein, like element numbers are intended to indicate like elements or features.

When performing inference using an embedding table, large numbers of weights, arranged as weight vectors, may be retrieved from an embedding table and aggregated. Each weight vector may be identified by a respective index into the embedding table. Indices may be arranged as index vectors; the index vectors may include a significant proportion of repeated indices. A machine learning inference application may generate sets of index vectors, when performing inference operations using an embedding table, and the machine learning inference application may request a weight vector for each of the indices in each index vector. The machine learning inference application may, after receiving the weight vectors, aggregate (e.g., sum or concatenate) the weight vectors. In some inference operations, indices may be repeated within some index vectors and also between index vectors. In such a system significant inefficiency may occur if, for example, a separate read operation is employed to read a weight from persistent storage multiple times if the index of the weight occurs repeatedly in the index vectors.

In some embodiments, retrieval of weights from an embedding table is streamlined by avoiding repeated fetching from persistent storage of weights corresponding to repeated indices in index vectors. This may be accomplished by (i) forming, from each index vector, a culled index vector within which each index is present only once (i.e., within which there are no repeated indices) and by (ii) implementing a shared cache for temporarily storing retrieved weight vectors. As used herein, a "culled" vector is one in which there are no repeated elements, and an element of which there are no duplicates in a vector may be referred to as being a "culled" element of the vector. The cache may be shared by a plurality of threads, each thread being tasked, for example, with retrieving a respective weight vector. The use of a shared cache may make it possible for one thread to retrieve from the cache a weight vector that was fetched from persistent storage by another thread. The forming of culled index vectors may be accomplished by hashing each index and saving the hashed values and the corresponding indices to a hashed values table. The hashed values table then may serve as an indication of index values that have already been encountered within any one index vector.

Natural language processing (NLP) machine learning models and recommendation machine learning models may use large embedding tables (e.g., as large as hundreds of terabytes (TB)). The use of only dynamic random-access memory (DRAM) to store such tables may be costly, and, as such, persistent storage devices (e.g., solid state drives (SSDs)) may be employed to store the embedding table. Persistent storage devices, however, may be slower than DRAM.

In a deep learning workload, queries may be received in batch granularity (instead of, e.g., being received one query at a time), and the workload may exhibit high temporal locality (e.g., the workload may involve accessing repeated items (embedding vectors) numerous times during the course of the execution).

For a workload involving inference using an embedding table, the data batches may be formatted as large flat vectors (or "index vectors") and sent to the device as input-output (IO) requests. The embedding table may store a plurality of weight vectors, each of which may be identified by a respective index, and each of which may be one row of the embedding table. Because of the temporal locality, an index vector may include multiple repeated (embedding table lookup) indices. Once the weight vectors have been retrieved from the embedding table, they may be aggregated (e.g., summed or concatenated), in a subsequent step of the inference operation.

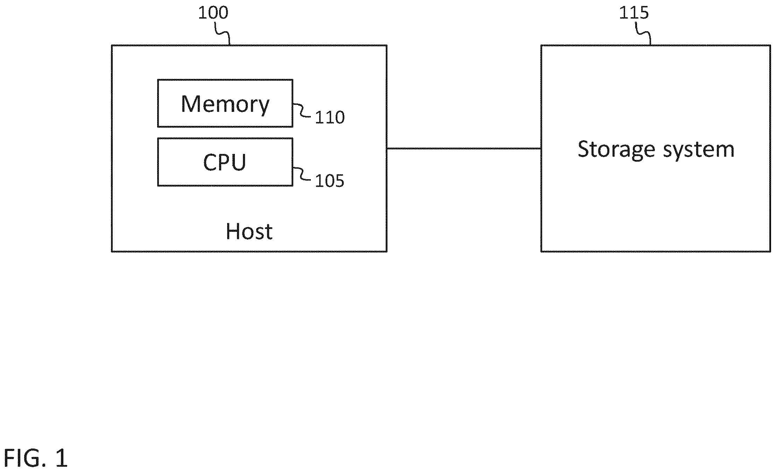

FIG. 1 is a block diagram of a system for performing machine learning inference using an embedding table, in some embodiments. A host 100, which may include a processing circuit 105 (e.g., a central processing unit (CPU)) and a memory 110 (e.g., a shared memory, which may be a DRAM memory) may be connected to a persistent storage system 115, which may share an enclosure and other elements (e.g., a power supply) with the host 100, or which may be in a separate enclosure, and which may include, for example, one or more solid state drives (SSDs). In operation, the host may send read commands to the persistent storage, which may, in response, retrieve data and send it to the host. As mentioned above, the persistent storage system 115 may store one or more embedding tables. Each embedding table may store a plurality of weight vectors, each of which may be identified by a respective index, and each of which may be one row of the embedding table. In operation, during inference operations, the weight vectors may be retrieved based on index vectors, each element of each of which may identify a row (e.g., an index vector) to be retrieved from the persistent storage system 115. Once the weight vectors have been retrieved from the embedding table, they may be aggregated (e.g., summed or concatenated), in a subsequent step of the inference operation.

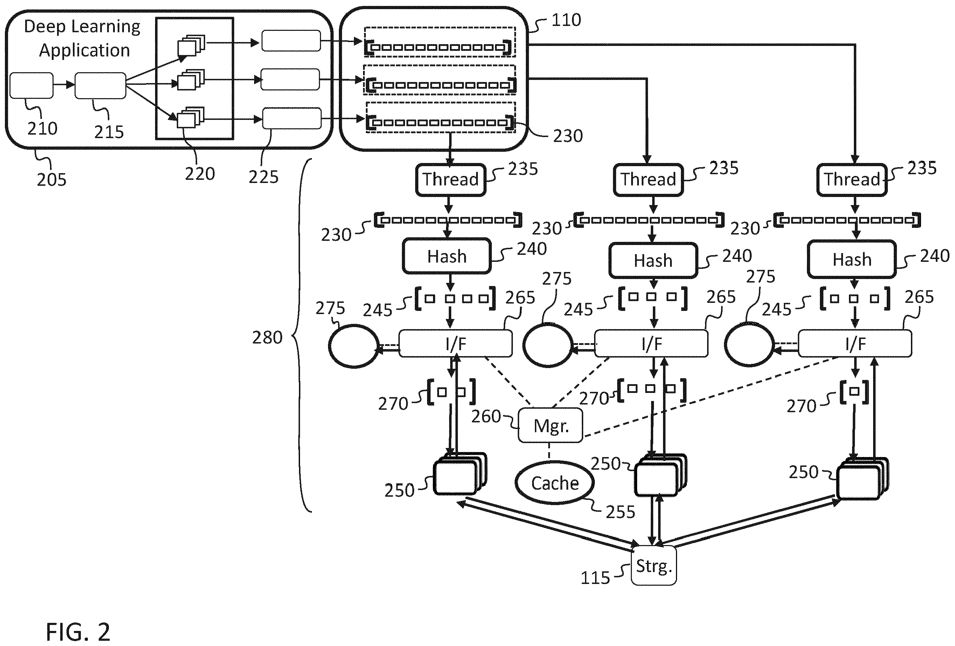

FIG. 2 is a functional block diagram of a machine learning inference application and a persistent storage driver for retrieving weights from an embedding table. The machine learning inference application 205 (or deep learning application) may generate a plurality of queries 210, each of which may be the result of a request, received by the machine learning inference application 205, to process an input (e.g., to generate a recommendation, or to classify a natural language phrase or sentence). A workload scheduler 215 may arrange the embedding table lookups corresponding to each query into a plurality of batches 220, which may be grouped into inference processes 225. The index vectors 230 corresponding to each embedding table lookup may then be stored in the shared memory 110.

To perform the embedding table lookups for the index vectors 230, each index vector 230 may be processed by a respective IO scheduling thread 235. Each index vector 230 may include one or more repeated indices. To avoid performing repeated embedding table lookups for such repeated indices, a culled index vector 245 may be formed, by the IO scheduling thread 235, using a vector hash 240. The vector hash 240 may include a hash function and a hashed values table. The hashed values table may store a plurality of ordered pairs, each ordered pair including a hashed value and a corresponding index.

The IO scheduling thread 235 may use the vector hash 240, to form the culled index vector 245, as follows. Each element (i.e., each index) of the index vector 230 may be hashed (using a suitable hash function, examples of which include without limitation MurmurHash, CityHash, SpookyHash, and SipHash) to form a corresponding hashed value. The IO scheduling thread 235 may then perform a check, for the hashed value in the hashed values table, i.e., it may check whether the hashed value is present in the hashed values table. If the hashed value is not present in the hashed values table, the IO scheduling thread 235 may add the index to the culled index vector 245, and store a new ordered pair in the hashed values table, the new ordered pair including (i) the hashed value, and (ii) the index. If the hashed value is present in the hashed values table, it may be (i) because the index is a repeated index which has already been processed (and stored in the hashed values table) by the IO scheduling thread 235 or (ii) because of a collision with another index that has been processed by the IO scheduling thread 235 (i.e., another index that, when hashed, results in the same hashed value, has already been processed by the IO scheduling thread 235). To determine whether the presence of the hashed value is due to the present index being a repeated index or to a collision, the IO scheduling thread 235 may compare the index to the index associated, in the hashed values table, with the hashed value; if they are the same, then the presence of the hashed value is due to the present index being a repeated index, and the IO scheduling thread 235 proceeds to the next element of the index vector. If the present index is not the same as the index associated, in the hashed values table, with the hashed value, then the presence of the hashed value is due to a collision, and the IO scheduling thread 235 calculates another hashed value for the index (e.g., using a different hash function). This process may be repeated with additional hash functions until a collision is not detected (and (i) it is determined that the index is a repeated index, or (ii) the index is stored, with the last hash value calculated, in the hashed values table).

Once a culled index vector 245 has been generated from the index vector, the IO scheduling thread 235 may request a weight vector corresponding to each index of the culled index vector 245. To accomplish this requesting, the IO scheduling thread 235 may spawn an IO thread 250 for each of the elements of the culled index vector 245, each IO thread 250 being tasked with returning a weight vector corresponding its respective index.

Each IO thread 250 may then either retrieve the weight vector from a shared cache 255 or, if it is absent from the cache, from the persistent storage system 115. The IO thread 250 may accomplish this in cooperation with a shared cache manager 260, with which it may communicate through a cache interface 265. For example, the IO thread 250 may perform a check, in the shared cache 255, for the index that it was assigned by the IO scheduling thread 235, and, in response to the result of the check being positive (i.e., indicating that the weight vector corresponding to the index is in the shared cache 255), the IO thread 250 may read, from the shared cache 255, the weight vector corresponding to the index. If the result of the check is negative (i.e., the weight vector corresponding to the index is not in the shared cache 255, and the index is a member of the set of un-cached indices 270), the IO thread 250 may read the weight vector corresponding to the index from the persistent storage system 115. Once the weight vector has been retrieved (from the shared cache 255 or from the persistent storage system 115), it may be written to an output buffer 275. Duplicates of the weight vectors corresponding to repeated indices in the index vector 230 may then be inserted, so that the set of weight vectors returned to the machine learning inference application 205 includes one weight vector for each element of the index vector 230.

All of the IO threads 250 may use a shared cache manager 260 and the same shared cache 255, so that a weight vector that has already been fetched from the persistent storage system 115 by one IO thread 250 need not be fetched from the persistent storage system 115 by another IO thread 250 which may have been tasked with retrieving the weight vector for the same index. Each cache interface 265 may interact with the shared cache manager 260 through cache get and cache insert commands, and the shared cache manager 260 may interact with the shared cache 255 through cache insert and cache get commands.

The functions for retrieving weight vectors from the persistent storage system 115 in a manner that avoids repeated requests for the same weight vector (including the IO scheduling threads 235, the culled vector hash 240, the shared cache 255, the shared cache manager 260, and the cache interface 265) may all be implemented in a device driver 280 (e.g., a persistent storage driver, such as a Nonvolatile Memory Express (NVME) driver) for interfacing with the persistent storage system 115.

In some embodiments, input-output operations for multiple inferences and threads may be reduced dramatically. The exact IO reduction may depend on the specific inference workload; in some examples, the number of read operations from the persistent storage system 115 may be reduced. The shared cache manager 260 may run in a separate thread that inserts new cache entries and does evictions in the background. The shared cache manager 260 may also check whether a key (i.e., an index) is in the cache, register and deregister cache interfaces for each process, and generate reports about cache statistics such as hit rate and cache latency overhead.

The use of separate multiple threads for cache interface and device IO may have the effect of saturating both the bandwidth of the shared memory 110 and the bandwidth of the interface (e.g., the NVME interface) to the persistent storage system 115. The cache interface may perform asynchronous writes in the cache interface 265, which may make it possible to write to output as soon as a weight vector is fetched from the persistent storage system 115, reducing latency. The allocation of tasks to threads in some embodiments may improve the latency and hit rate. For example, if the shared cache were implemented in the IO threads 250, the number of threads for sending put and get requests to the shared cache 255 might be poorly matched to the bandwidth of the shared memory 110, increasing the latency of the shared cache 255.

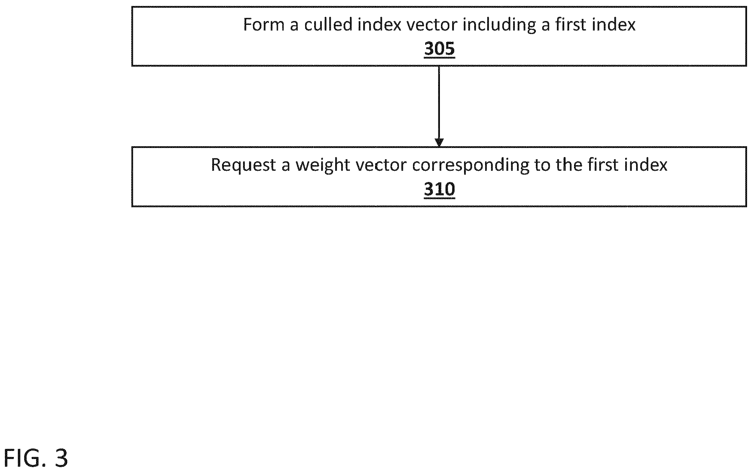

FIG. 3 is a flow chart of a portion of a method for retrieving data from an embedding table, according to an embodiment of the present disclosure. In some embodiments, the method includes forming, at 305, a culled index vector including a first index, the first index being a first element of a first index vector, the first index being culled within the culled index vector; and requesting, at 310, a weight vector corresponding to the first index.

As used herein, "a portion of" something means "at least some of" the thing, and as such may mean less than all of, or all of, the thing. As such, "a portion of" a thing includes the entire thing as a special case, i.e., the entire thing is an example of a portion of the thing. As used herein, the term "or" should be interpreted as "and/or", such that, for example, "A or B" means any one of "A" or "B" or "A and B".

The background provided in the Background section of the present disclosure section is included only to set context, and the content of this section is not admitted to be prior art. Any of the components or any combination of the components described (e.g., in any system diagrams included herein) may be used to perform one or more of the operations of any flow chart included herein. Further, (i) the operations are example operations, and may involve various additional steps not explicitly covered, and (ii) the temporal order of the operations may be varied.

Each of the terms "processing circuit" and "means for processing" is used herein to mean any combination of hardware, firmware, and software, employed to process data or digital signals. Processing circuit hardware may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processing circuit, as used herein, each function is performed either by hardware configured, i.e., hard-wired, to perform that function, or by more general-purpose hardware, such as a CPU, configured to execute instructions stored in a non-transitory storage medium. A processing circuit may be fabricated on a single printed circuit board (PCB) or distributed over several interconnected PCBs. A processing circuit may contain other processing circuits; for example, a processing circuit may include two processing circuits, an FPGA and a CPU, interconnected on a PCB.

As used herein, each of the terms "vector" and "array" refers to an ordered set of numbers regardless of how stored (e.g., whether stored in consecutive memory locations, or in a linked list).

As used herein, when a method (e.g., an adjustment) or a first quantity (e.g., a first variable) is referred to as being "based on" a second quantity (e.g., a second variable) it means that the second quantity is an input to the method or influences the first quantity, e.g., the second quantity may be an input (e.g., the only input, or one of several inputs) to a function that calculates the first quantity, or the first quantity may be equal to the second quantity, or the first quantity may be the same as (e.g., stored at the same location or locations in memory as) the second quantity.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section, without departing from the spirit and scope of the inventive concept.

The terminology used herein is for the purpose of describing particular embodiments only and is not intended to be limiting of the inventive concept. As used herein, the terms "substantially," "about," and similar terms are used as terms of approximation and not as terms of degree, and are intended to account for the inherent deviations in measured or calculated values that would be recognized by those of ordinary skill in the art.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". Also, the term "exemplary" is intended to refer to an example or illustration. As used herein, the terms "use," "using," and "used" may be considered synonymous with the terms "utilize," "utilizing," and "utilized," respectively.

It will be understood that when an element or layer is referred to as being "on", "connected to", "coupled to", or "adjacent to" another element or layer, it may be directly on, connected to, coupled to, or adjacent to the other element or layer, or one or more intervening elements or layers may be present. In contrast, when an element or layer is referred to as being "directly on", "directly connected to", "directly coupled to", or "immediately adjacent to" another element or layer, there are no intervening elements or layers present.

Although exemplary embodiments of a system and method for inference using an embedding table have been specifically described and illustrated herein, many modifications and variations will be apparent to those skilled in the art. Accordingly, it is to be understood that a system and method for inference using an embedding table constructed according to principles of this disclosure may be embodied other than as specifically described herein. The invention is also defined in the following claims.

## Claims

1. A method, comprising:
forming a culled index vector comprising a first index, the first index being a first element of a first index vector, the first index being culled within the culled index vector; and
requesting a weight vector corresponding to the first index.

2. The method of claim 1, wherein the forming of the culled index vector comprises calculating a first hashed value, the calculating of the first hashed value comprising hashing the first element of the first index vector.

3. The method of claim 2, wherein the forming of the culled index vector further comprises performing a check for the first hashed value in a hashed values table.

4. The method of claim 3, wherein the forming of the culled index vector further comprises, in response to a result of the check, saving the first index and the first hashed value in the hashed values table.

5. The method of any one of claims 2 to 4, wherein the forming of the culled index vector further comprises:
performing a check for the first hashed value in a hashed values table;
determining that the first hashed value is present in the hashed values table;
calculating a second hashed value, the calculating of the second hashed value comprising hashing the first index;
performing a check for the second hashed value in the hashed values table; and
saving the first index and the second hashed value in the hashed values table.

6. The method of any one of claims 2 to 5, wherein the forming of the culled index vector further comprises calculating a second hashed value, the calculating of the second hashed value comprising hashing a second element of the first index vector.

7. The method of claim 6, wherein the forming of the culled index vector further comprises performing a check for the second hashed value in the hashed values table.

8. The method of any one of claims 1 to 7, wherein the requesting of the weight vector comprises performing a check, in a cache, for the first index.

9. The method of claim 8, wherein the requesting of the weight vector further comprises, in response to a result of the check, reading, from the cache, a weight vector corresponding to the first index.

10. The method of claim 9, wherein:
the performing of the check comprises performing the check by a first input-output thread and
the reading from the cache comprises reading from the cache by the first input-output thread.

11. The method of any one of claims 8 to 10, wherein the requesting of the weight vector further comprises, in response to a result of the check, reading, from persistent storage, a weight vector corresponding to the first index.

12. The method of any one of the preceding claims, wherein the forming of the culled index vector comprises forming the culled index vector by a persistent storage driver.

13. The method of claim 12, wherein the requesting of the weight vector comprises requesting the weight vector by the persistent storage driver.

14. The method of claim 12 or 13, wherein the persistent storage driver comprises a Nonvolatile Memory Express, NVME, driver.

15. A system, comprising:
a processing circuit; and
memory, operatively connected to the processing circuit and storing instructions that, when executed by the processing circuit, cause the system to perform the method according to any one of claims 1 to 14.
